# EUROPEAN PATENT APPLICATION

(11) **EP 3 240 313 A1**
(43) Date of publication of application: **01.11.2017**
(21) Application number: 15871645.6
(22) Date of filing: 25.06.2015
(51) Int. Cl.: H04W 4/06

(54) **METHOD AND DEVICE FOR INFORMATION NOTIFICATION**

(30) Priority: 25.12.2014 CN 201410828607
(71) Applicant: ZTE Corporation, Shenzhen, Guangdong 518057 (CN)
(72) Inventor: XU, Hui, Shenzhen Guangdong 518057 (CN); MA, Zijiang, Shenzhen Guangdong 518057 (CN); LV, Yong, Shenzhen Guangdong 518057 (CN); LU, Chen, Shenzhen Guangdong 518057 (CN)
(74) Representative: Mozzi, Matteo
(86) International application number: PCT/CN2015/082387
(87) International publication number: WO 2016/101570

(57) **Abstract**

Provided are a method and device for information notification. The method includes that: a base station acquires a Temporary Mobile Group Identity (TMGI), wherein the TMGI indicates a traffic information service, and is allocated by a Broadcast Multicast Service Center (BM-SC) (S202); and the base station sends expanded Multimedia Broadcast Multicast Service (MBMS) Control Channel (MCCH) notification information according to the TMGI, wherein the expanded MCCH notification information indicate that an MCCH message corresponding to traffic information has been updated (S204). The present invention can reduce the power consumption for an On Board Unit (OBU) to acquire traffic information, thus facilitating the OBU to timely receive the traffic information required.

## Description

### Technical Field

The present invention relates to the communication field, in particular to a method and device for information notification.

### Background

With the rapid development of economic society, the possession quantity of cars in China is growing fast. Thereby road traffic accidents occur frequently, which has become one of the important factors that influence public sense of safety. And the problem of traffic safety has become one of the basic problems that influence social harmony and improve people's livelihood. China is in urgent need to improve the traffic safety from all aspects like technology, policy and education, and improving the design of vehicle safety is an important component.

The technologies of improving vehicle safety can be mainly divided into a passive safety technology and an active safety technology. The passive safety technology is used for protecting people and goods inside and outside the vehicle after the accident; and the active safety technology is used for preventing and reducing accidents of the vehicle, so as to prevent people from injury. The active safety technology is focus and trend of the development of modern vehicle safety technology.

By using the advanced wireless communication technology and new-generation information processing technology, a communication-based collision warning system realizes real-time information interaction between vehicles and between vehicle and roadside infrastructure, informs the current states (which may include: position, velocity, acceleration and driving route of a vehicle) and acquired road environment information, collaboratively senses danger conditions of road, and provides timely a variety of collision warning information, so as to prevent the occurrence of road traffic accident; the above has gradually become a new idea for each country to attempt to solve the problem of road traffic safety at present.

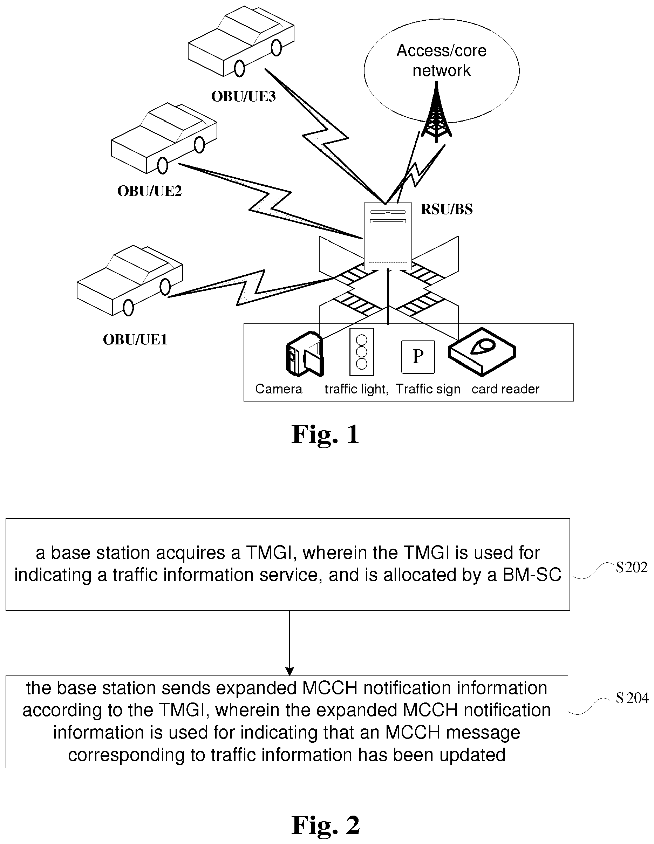

By utilizing vehicle information provided by a sensor loaded on a vehicle, a vehicle terminal or a electronic label, the Internet of Vehicles realize interconnection between vehicle and vehicle, between vehicle and people, and between vehicle and road by adopting various communication technologies. The Internet of Vehicles effectively manages and controls vehicles and provides an integrated service through extracting and sharing information on an information network platform. Fig. 1 is a schematic diagram of sending traffic and scheduling information to a vehicle through a network information platform according to the related art.

In recent years, with the development of new mobile communication technologies, a research of using a Long Term Evolution (LTE) technology to solve the communication application based on Internet of Vehicles appears in the world.

With the rapid development of Internet and the popularization of multifunctional mobile terminal with large screen, there are a lot of mobile data multimedia services and a variety of high-bandwidth multimedia services, such as video conference, television broadcast, video on demand, advertisement, online education and interactive game, which satisfies the requirement of mobile subscribers for multiple services and brings mobile operators a new service increasing point. These mobile data multimedia services require multiple subscribers to receive the same data simultaneously, and compared with the common data service, have the characteristics of large volume of data, long duration, and being delay-sensitive.

In order to effectively use mobile network resources, the 3rd Generation Partnership Project (3GPP) puts forward a Multimedia Broadcast Multicast Service (MBMS); the service is a technology of transmitting data from a data source to multiple target mobile terminals, it realizes the sharing of network (including a core network and an access network) resources, and improves the utilization of network resources (especially an air interface resource). The MBMS service defined by 3GPP can not only realize multicast and broadcast of plain-text low-speed messages, but also realize multicast and broadcast of high-speed multimedia services, and provides a variety of video, audio and multimedia services, which assuredly complies with the trend of development of future mobile data, and provides a better service prospect for the development of the 3rd Generation Mobile Technology (3G).

The characteristics of the MBMS service are that the data volume of service is large, the duration of reception of a mobile terminal is long, and the average data rate is constant. The above characteristics determine that configurations of both scheduling and control signaling of the MBMS service are semi-static, that is, both scheduling information and control signaling information of the MBMS service remain unchanged for a long time, and these information is sent periodically through an MBMS Control Channel (MCCH) and collectively called MCCH information. There may be multiple MCCHs in an evolved MBMS (eMBMS) system, and each MCCH corresponds to different Multimedia Broadcast Single Frequency Network (MBSFN) areas, and only carries control information of the MBMS service sent by the corresponding MBSFN area.

An MBMS notification message is used for describing whether MCCH information changes; a piece of User Equipment (UE) in a Radio Resource Control (RRC) idle mode or an RRC connected mode can get whether the MCCH information changes by only monitoring the MBMS notification message, so that selective reception of the MCCH information is realized. That is, only when the MCCH information changes, new MCCH information is received. Because the amount of information of the MBMS notification message is much less than that of the MCCH information, the selective reception of the MCCH information of the UE can effectively save resource and reduce power consumption. The MCCH notification message is carried on a Physical Downlink Control Channel (PDCCH) of the specified MBSFN sub-frame and sent periodically. Correspondingly the MBSFN sub-frame and sending period are indicated through a system message (SIB13).

In the LTE system, to notify the UE that a certain MBMS service will perform a session start or a network side initiates a counting request, it is possible to first send Downlink Control Information (DCI) and an MBMS-Radio Network Temporary Identifier (M-RNTI) on a PDCCH. The UE reads a specific MCCH message according to the related information in the DCI, which is called an MCCH change notification mechanism. The specific service configuration parameters will be sent on the MCCH, for example, a service identity, Radio Link Control (RLC) of service, Media Access Control (MAC) and a physical layer configuration parameter.

By utilizing the characteristic of being capable of sending broadcast data to a service area of the MBMS technology, traffic condition, vehicle scheduling information and other information can be sent to an On Board Unit (OBU) in the service area, and the vehicle which has received traffic information can select a road to advance.

In the research and practice process of the prior art, the related art has the following problem, the UE which is interested in receiving the MBMS service first receives a service notification, and acquires a Temporary Mobile Group Identity (TMGI), service description, start time and other information according to the service notification. The UE monitors a service identifier required. In an environment of Internet of Vehicles, the road traffic condition may change suddenly. For example, a traffic accident occurs, at the point, a service notification cannot be sent in advance, and then the UE cannot acquire the identity TMGI of the service required. At the same time, the UE cannot determine whether it is the update of the traffic information required according to MCCH notification information. Therefore, the UE monitors all the MCCH notification information, which increases the power consumption of the UE, and the UE cannot acquire the required traffic information timely.

### Summary

The embodiments of the present invention provide a method and device for information notification, for at least solving the problem in related art that when the road traffic condition changes suddenly, a piece of UE needs to monitor all MCCH notification information, so the power consumption of the UE is increased, and the UE cannot acquire required traffic information timely.

According to an aspect of the present invention, a method for information notification is provided.

The method for information notification according to the present invention includes that: a base station (eNB) acquires a TMGI, and the TMGI is used for indicating a traffic information service, and is allocated by a Broadcast Multicast Service Center (BM-SC); and the base station sends expanded MCCH notification information according to the TMGI, and the expanded MCCH notification information is used for indicating that an MCCH message corresponding to traffic information has been updated.

In some embodiments, that the base station acquires the TMGI includes one of the followings: the base station receives the TMGI sent by an application server, and the TMGI is acquired by the application server by sending a request message to the BM-SC; and the base station receives the TMGI notified by an OBU and/or a piece of UE, and the TMGI is sent to the OBU and/or the UE by the application server after being acquired by the application server from the BM-SC.

In some embodiments, before the base station sends the expanded MCCH notification information according to the TMGI, the method further includes that: the base station receives a notification about the start of the traffic information service from the application server and/or the BM-SC.

In some embodiments, the expanded MCCH notification information indicates the traffic information and/or the type of traffic information by adding bits on the basis of the existing MCCH notification information.

In some embodiments, the MCCH message corresponding to traffic information includes at least one of the followings: location information corresponding to the traffic information; and the type of traffic information; and, the location information includes at least one of the followings: cell identity, MBSFN area identity, MBMS service identity, and geographical coordinates.

According to another aspect of the present invention, another method for information notification is provided.

The method for information notification according to the present invention includes that: the OBU and/or the UE receives the expanded MCCH notification information from the base station; and the OBU and/or the UE acquires the updated MCCH message and the traffic information on the corresponding MTCH according to the expanded MCCH notification information.

In some embodiments, before the OBU and/or the UE receives the expanded MCCH notification information from the base station, the method further includes that: the OBU and/or the UE receives the TMGI from the application server, and the TMGI is used for indicating the traffic information service, and is allocated by the BM-SC and acquired by the application server from the BM-SC.

In some embodiments, that the OBU and/or the UE acquires the updated MCCH message and the traffic information on the corresponding MTCH according to the expanded MCCH notification information includes that: the OBU and/or the UE acquires the updated MCCH message according to the expanded MCCH notification information, and determines that the traffic information on the corresponding MTCH is the traffic information required according to location information corresponding to the TMGI and information about the location where it is; and the OBU and/or the UE reads the traffic information on the corresponding MTCH.

According to another aspect of the present invention, another method for information notification is provided.

The method for information notification according to the present invention includes that: the application server receives a request message from the OBU and/or the UE; and the application server responds to the request message, and sends the expanded MCCH notification information to the OBU and/or the UE through the base station, and the expanded MCCH notification information is used for indicating that the MCCH message corresponding to the traffic information has been updated.

In some embodiments, the request message carries at least one of the followings: a traffic information identifier, which is used for indicating the traffic information required by the OBU and/or the UE; an area of traffic information, which is used for indicating a geographical location where the traffic information occurs; and a time window, which is used for indicating that the traffic information acquired in the time window is useful information.

According to another aspect of the present invention, another method for information notification is provided.

The method for information notification according to the present invention includes that: a vehicle to be scheduled is selected; and the traffic information is sent to the vehicle to be schedule.

In some embodiments, that the vehicle to be scheduled is selected includes that: a request message is received from the vehicle to be scheduled; vehicle demand information is sent through multicast bearer according to the request message; a demand response message of the vehicle to be scheduled is received; and the vehicle to be scheduled is selected according to the demand response message, information about the location where the vehicle to be scheduled is and information about traffic condition of the area where the vehicle to be scheduled is.

In some embodiments, that the traffic information is sent to the vehicle to be scheduled includes that: vehicle scheduling information is sent to the vehicle to be scheduled, and the vehicle scheduling information carries the identity of the vehicle to be scheduled; a confirmation message is received from the vehicle to be scheduled; and the traffic information is sent to the vehicle to be scheduled according to the confirmation message.

According to another aspect of the present invention, a device for information notification is provided.

The device for information notification according to the present invention includes: an acquiring module, which is configured to acquire the TMGI, and the TMGI is used for indicating the traffic information service, and is allocated by the BM-SC; and a sending module, which is configured to send the expanded MCCH notification information according to the TMGI, and the expanded MCCH notification information is used for indicating that the MCCH message corresponding to the traffic information has been updated.

In some embodiments, that the acquiring module is configured to acquire the TMGI includes one of the followings: the TMGI sent by the application server is received, and the TMGI is acquired by the application server by sending the request message to the BM-SC; and the TMGI notified by the OBU and/or the UE is received, and the TMGI is sent to the OBU and/or the UE by the application server after being acquired by the application server from the BM-SC.

In some embodiments, the expanded MCCH notification information indicates the traffic information and/or the type of traffic information by adding bits on the basis of the existing MCCH notification information.

In some embodiments, the MCCH message corresponding to traffic information includes at least one of the followings: the location information corresponding to the traffic information; and the type of traffic information; and, the location information includes at least one of the followings: the cell identity, the MBSFN area identity, the MBMS service identity, and the geographical coordinates.

According to another aspect of the present invention, another device for information notification is provided.

The device for information notification according to the present invention includes: a first receiving module, which is configured to receive the expanded MCCH notification information from the base station; and an acquiring module, which is configured to acquire the updated MCCH message and the traffic information on the corresponding MTCH according to the expanded MCCH notification information.

In some embodiments, the device further includes: a second receiving module, which is configured to receive the TMGI, and the TMGI is used for indicating the traffic information service, and is allocated by the BM-SC.

In some embodiments, the acquiring module includes: a processing unit, which is configured to acquire the updated MCCH message according to the expanded MCCH notification information, and determine that the traffic information on the corresponding MTCH is the traffic information required according to the location information corresponding to the TMGI and the information about the location where it is; and a reading unit, which is configured to read the traffic information on the corresponding MTCH.

According to another aspect of the present invention, another device for information notification is provided.

The device for information notification according to the present invention includes: a receiving module, which is configured to receive the request message from the OBU and/or the UE; and a notifying module, which is configured to respond to the request message, and send the expanded MCCH notification information, and the expanded MCCH notification information is used for indicating that the MCCH message corresponding to the traffic information has been updated.

In some embodiments, the request message carries at least one of the followings: the traffic information identifier, which is used for indicating the traffic information required by the OBU and/or the UE; the area of traffic information, which is used for indicating the geographical location where the traffic information occurs; and the time window, which is used for indicating that the traffic information acquired in the time window is useful information.

According to another aspect of the present invention, another device for information notification is provided.

The device for information notification according to the present invention includes: a selecting module, which is configured to select the vehicle to be scheduled; and a notifying module, which is configured to send the traffic information to the vehicle to be scheduled.

In some embodiments, the selecting module includes: a first receiving unit, which is configured to receive the request message from the vehicle to be scheduled; a first sending unit, which is configured to send the vehicle demand information through the multicast bearer according to the request message; a second receiving unit, which is configured to receive the demand response message of the vehicle to be scheduled; and a selecting unit, which is configured to select the vehicle to be scheduled according to the demand response message, the information about the location where the vehicle to be scheduled is and the information about traffic condition of the area where the vehicle to be scheduled is.

In some embodiments, the notifying module includes: a second sending unit, which is configured to send the vehicle scheduling information to the vehicle to be scheduled, and the vehicle scheduling information carries the identity of the vehicle to be scheduled; a third receiving unit, which is configured to receive the confirmation message from the vehicle to be scheduled; and a notifying unit, which is configured to send the traffic information to the vehicle to be scheduled according to the confirmation message.

According to the embodiments of the present invention, the base station acquires the TMGI, and the TMGI is used for indicating the traffic information service and is allocated by the BM-SC; and the base station sends the expanded MCCH notification information according to the TMGI, and the expanded MCCH notification information is used for indicating that the MCCH message corresponding to the traffic information has been updated; in such a manner, the problem in related art that when the road traffic condition changes suddenly, the UE needs to monitor all MCCH notification information, so the power consumption of the UE is increased, and the UE cannot acquire the needed traffic information timely is solved, thus reducing the power consumption for the OBU to acquire traffic and scheduling information, and facilitating the OBU to receive the required traffic information timely.

### Brief Description of the Drawings

The accompanying drawings described here are used for providing a deeper understanding of the present invention, and constitute a part of the application; schematic embodiments of the present invention and description thereof are used for illustrating the present invention.
Fig. 1 is a schematic diagram of sending traffic and scheduling information to a vehicle through a network information platform according to the related technology.
Fig. 2 is a flowchart of a method for information notification according to an embodiment of the present invention.
Fig. 3 is a flowchart of another method for information notification according to an embodiment of the present invention.
Fig. 4 is a flowchart aiming at an unexpected traffic condition according to an exemplary embodiment of the present invention.
Fig. 5 is a schematic diagram of expanded MCCH notification information according to an exemplary embodiment of the present invention.
Fig. 6 is a flowchart aiming at normal traffic condition according to an exemplary embodiment of the present invention.
Fig. 7 is a flowchart of another method for information notification according to an embodiment of the present invention.
Fig. 8 is a flowchart that an OBU requests traffic condition information according to an exemplary embodiment of the present invention.
Fig. 9 is a flowchart of another method for information notification according to an embodiment of the present invention.
Fig. 10 is a flowchart that a traffic information center sends vehicle scheduling information according to preferred embodiment 4 of the present invention.
Fig. 11 is a structure diagram of a device for information notification according to an embodiment of the present invention.
Fig. 12 is a structure diagram of another device for information notification according to an embodiment of the present invention.
Fig. 13 is a structure diagram of another device for information notification according to an embodiment of the present invention.
Fig. 14 is a structure diagram of another device for information notification according to an embodiment of the present invention.
Fig. 15 is a structure diagram of another device for information notification according to an embodiment of the present invention.

### Detailed Description of the Embodiments

The present invention is elaborated below with reference to the accompanying drawings and embodiments. Note that, the embodiments of the present invention and the characteristics in the embodiments can be combined under the condition of no conflicts.

Fig. 2 is a flowchart of a method for information notification according to an embodiment of the present invention. As shown in Fig. 2, the method may include the steps S202 to S204.

At step S202, a base station acquires a TMGI. The TMGI is used for indicating a traffic information service, and is allocated by a BM-SC.

At step S204, the base station sends expanded MCCH notification information according to the TMGI. The expanded MCCH notification information is used for indicating that an MCCH message corresponding to traffic information has been updated.

In related technology, when the road traffic condition changes suddenly, the UE needs to monitor all MCCH notification information. Therefore, the power consumption of the UE is increased, and the UE cannot acquire the needed traffic information timely. By using the method shown in Fig. 2, for an unexpected traffic condition, it is possible to reserve one or more TMGIs for indicating the traffic information service. The traffic information is indicated in MCCH update notification information, and the OBU monitoring the notification information can acquire the MCCH message and MTCH data containing the traffic information according to the traffic information. But for a normal traffic condition, there is no need to reserve the TMGI. A traffic information center can send a service notification according to the existing flow, and the OBU acquires the TMGI corresponding to the traffic information according to the service notification. The traffic information is indicated in the MCCH update notification information, and the OBU monitors the notification information and the MCCH message, and acquires the MTCH data required. Therefore, the problem in related technology that when the road traffic condition changes suddenly, the UE needs to monitor all MCCH notification information, so the power consumption of the UE is increased and the UE cannot acquire the needed traffic information timely is solved. Thereby reducing the power consumption for the OBU to acquire traffic and scheduling information, and facilitating the OBU to receive the required traffic information timely.

In some embodiments, in S202, the base station can acquire the TMGI by one of the two ways.

In the first way, the base station receives the TMGI sent by an application server, and the TMGI is acquired by the application server by sending a request message to the BM-SC.

In the second way, the base station receives the TMGI notified by the OBU and/or the UE, and the TMGI is sent to the OBU and/or the UE by the application server after being acquired by the application server from the BM-SC.

In some embodiments, in S204, before the base station sends the expanded MCCH notification information according to the TMGI, the method may also include the step S1: the base station receives a notification about the start of the traffic information service from the application server and/or the BM-SC.

In an exemplary implementation process, the expanded MCCH notification information indicates the traffic information and/or the type of traffic information by adding bits on the basis of the existing MCCH notification information.

In an exemplary implementation process, the MCCH message corresponding to traffic information may include at least one of the following information: (1) the location information corresponding to the traffic information; (2) the type of traffic information.

The location information includes at least one of the followings: the cell identity, the MBSFN area identity, the MBMS service identity, and the geographical coordinates.

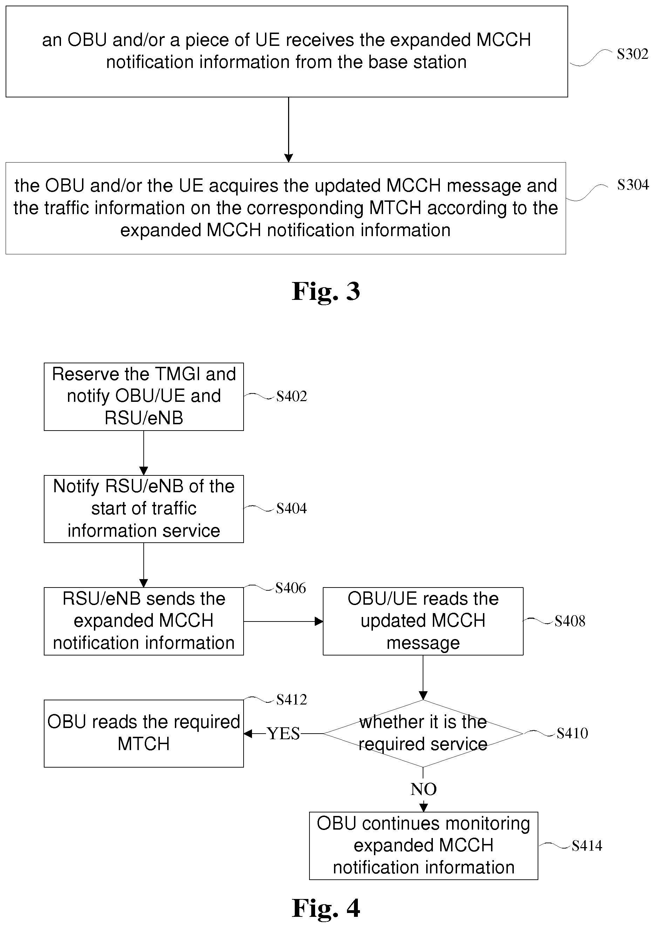

Fig. 3 is a flowchart of another method for information notification according to an embodiment of the present invention. As shown in Fig. 3, the method may include the following processing steps S302 to S304.

At step S302, the OBU and/or the UE receives the expanded MCCH notification information from the base station.

At step S304, the OBU and/or the UE acquires the updated MCCH message and the traffic information on the corresponding MTCH according to the expanded MCCH notification information.

In some embodiments, before the OBU and/or the UE receives the expanded MCCH notification information from the base station in S302, the method may also include the following step S2: the OBU and/or the UE receives the TMGI from the application server, and the TMGI is used for indicating the traffic information service, and is allocated by the BM-SC and acquired by the application server from the BM-SC.

In some embodiments, in S304, that the OBU and/or the UE acquires the updated MCCH message and the traffic information on the corresponding MTCH according to the expanded MCCH notification information may include the following steps S3 to S4.

At step S3, the OBU and/or the UE acquires the updated MCCH message according to the expanded MCCH notification information, and determines that the traffic information on the corresponding MTCH is the traffic information required according to location information corresponding to the TMGI and information about the location where it is; and

At step S4, the OBU and/or the UE reads the traffic information on the corresponding MTCH.

As an exemplary embodiment of the present invention, Fig. 4 is a flowchart aiming at an unexpected traffic condition according to an exemplary embodiment of the present invention. As shown in Fig. 4, this flow may include the following steps S402 to S414.

At step S402, the TMGI for indicating the traffic information is reserved and notified to the eNB and the OBU.

In an exemplary embodiment, the operation of reserving the TMGI is completed by the BM-SC. Firstly, the traffic information center sends the reserved TMGI to the BM-SC for indicating the request message of the traffic information service. Secondly, the BM-SC reserves one or more TMGIs and notifies the traffic information center. At last, the traffic information center notifies the OBU in a service area through application layer signaling, and the TMGI used for the traffic information service has been reserved, then the traffic information center notifies the eNB through the route BM-SC->MBMS-GW->MME->MCE->eNB. Or, after receiving the reserved TMGI, the OBU notifies it to the eNB through air interface signaling.

At step S404, the traffic information center notifies the start of the traffic information service to the eNB.

The traffic information center can notify the eNB through the route BM-SC->MBMS-GW->MME->MCE->eNB, and the notification can be realized by the flow MBMS session start or MBMS session update. The MCE can notify the eNB at an M2 interface through MBMS scheduling information.

At step S406, the eNB sends the expanded MCCH notification information for indicating the start of the traffic information service.

After receiving the MBMS scheduling information sent by the MCE, the eNB can determine that it is the traffic information service according to the value of the TMGI.

The eNB sends the expanded MCCH notification information on the PDCCH of an MBSFN sub-frame; the expanded MCCH notification information is adding bits for indicating the traffic information on the basis of the existing 8-bit DCI information. Allowing for there are also 4, 5 or 7 extra bits according to different system bandwidths except the 8 bits in the existing DCI-1C, these extra bits can be adopted to indicate the traffic information, and further indicate the type of the traffic information.

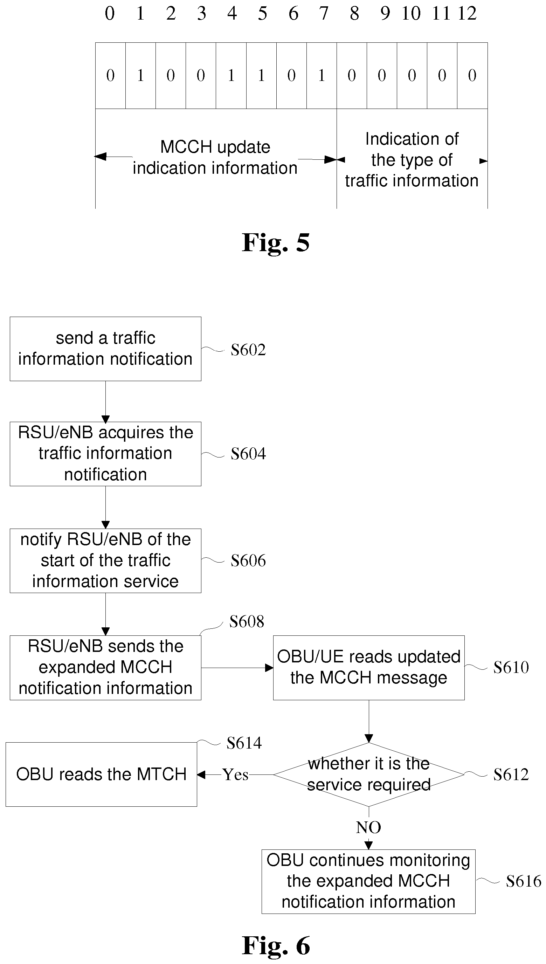

Fig. 5 is a schematic diagram of expanded MCCH notification information according to an exemplary embodiment of the present invention. As shown in Fig. 5, supposing the second byte octet2 has 4 bits, namely B1 to B4. B1=1 represents traffic information, and B1=0 represents vehicle scheduling information. B2B3 is information priority or information type. "00" represents emergency, such as traffic accident. "01/10" represents important, such as jams. "11" represents normal. B4 is the reserved bit. The specific definition of the expanded bits in the MCCH notification information can be set according to the need of traffic information.

At step S408, the OBU which is interested in receiving the traffic information reads the MCCH message according to the indication of the notification information.

The OBU which is interested in receiving the traffic information has been registered at the traffic information center and known the TMGI corresponding to the traffic information service.

The OBU monitors the expanded MCCH notification information, and further acquires the updated MCCH message according to the indication information "the type of traffic information" therein.

The traffic information TMGI in the MCCH message correspondingly contain the location information of the traffic information; the location information is used for indicating the geographical location where the traffic information (e.g. traffic accidents and jams) occurs; the geographical location can be at least one of the followings: a cell identity, a service area identity, an MBSFN area identity, a tracking area identity, and a geographical coordinates.

At step S410, the OBU judges whether the MCCH message includes the required traffic information for the OBU. If the traffic information is so, turn to step S412; or else, turn to step S414.

The OBU reads the updated MCCH message, and judges whether the traffic information is that required according to the location information corresponding to the traffic information TMGI and the information about the location where it is (e.g. according to the GPS or system broadcast); if the vehicle where the OBU is loaded is in the area of the traffic information or is about to go to the area of the traffic information, the traffic information is that required; or else, the traffic information is not that required.

At step S412, the OBU reads the traffic information on the MCCH.

If the OBU determines that the updated traffic information is the traffic information required, then it can further read the required traffic information on the MTCH according to the indication of the MCCH message.

At step S414, the OBU continues monitoring the MCCH notification information.

If the OBU determines that the updated traffic information is not that required, then it continues monitoring the expanded MCCH notification information.

As another preferred embodiment of the present invention, Fig. 6 is a flowchart aiming at normal traffic condition according to an exemplary embodiment of the present invention. As shown in Fig. 6, the flow may include the following steps S602 to S616.

At step S602, the traffic information center sends a traffic information notification.

The traffic information center is usually a server, and can be managed and maintained by an information provider (e.g. the traffic management department) or an operator; there is an interface between the traffic information center and the BM-SC, e.g. an MB2 interface.

The traffic information center may send the notification by many ways, for example, SMS, MMS, WAP, PUSH, and website push; it is needed to send the notification to the OBU/UE which has been registered at the center.

The above notification at least may include: the TMGI of the traffic information and description of the traffic information; the TMGI can be allocated by the BM-SC.

At step S604, the base station acquires the traffic information notification.

The base station is all the eNBs in the area of the traffic information service. The eNB can acquire the notification by the following two ways.

In the first way, the traffic information center sends the notification to the eNB through the 3GPP network.

In the second way, the UE which has acquired the notification sends the notification to the eNB through air interface signaling.

At step S606, the traffic information center notifies the start of the traffic information service to the eNB.

The traffic information center notifies the eNB through the route BM-SC->MBMS-GW->MME->MCE->eNB, and the notification can be realized by the flow MBMS session start or MBMS session update. The MCE can notify the eNB at the M2 interface through MBMS scheduling information.

At step S608, the eNB sends the expanded MCCH notification information for indicating the start of the traffic information service.

At step S610, the OBU which is interested in receiving the traffic information reads the MCCH message according to the indication of the notification information.

At step S612, the OBU judges whether it is the traffic information required; if so, turn to step S614; or else, turn to step S616.

At step S614, the OBU reads the required traffic information on the MTCH.

If the OBU determines that the updated traffic information is the traffic information required, then it can further read the required traffic information on the MTCH according to the indication of the MCCH message.

At step S616, the OBU continues monitoring the MCCH notification information.

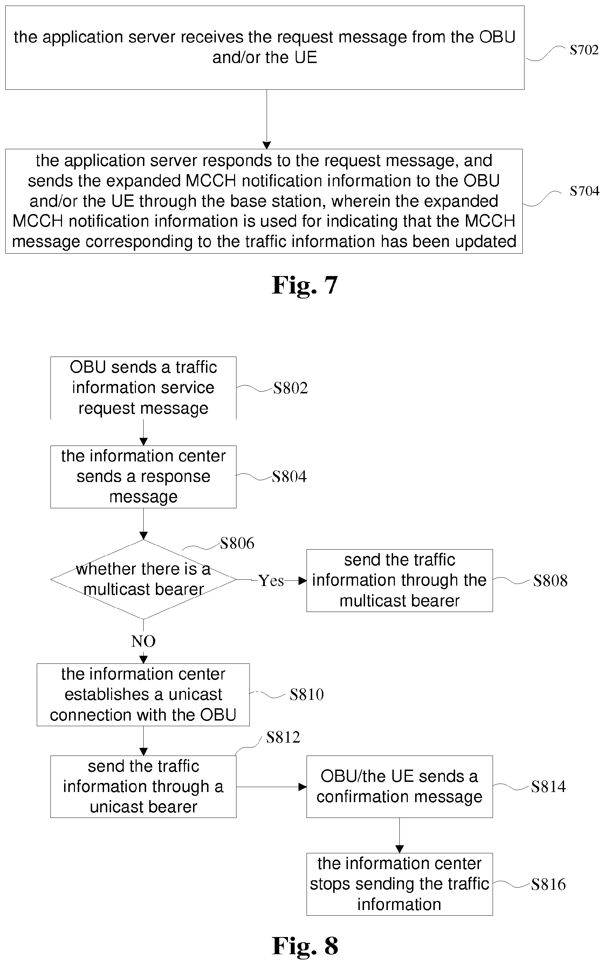

Fig. 7 is a flowchart of another method for information notification according to an embodiment of the present invention. As shown in Fig. 7, the method may include the following processing steps S702 to S704.

At step S702, the application server receives the request message from the OBU and/or the UE.

At step S704, the application server responds to the request message, and sends the expanded MCCH notification information to the OBU and/or the UE through the base station, and the expanded MCCH notification information is used for indicating that the MCCH message corresponding to the traffic information has been updated.

In an exemplary implementation process, the request message may carry at least one of the following information:
(1) a traffic information identifier, which is used for indicating the traffic information required by the OBU and/or the UE;
(2) an area of traffic information, which is used for indicating a geographical location where the traffic information occurs; and
(3) a time window, which is used for indicating that the traffic information acquired in the time window is useful information.

For the scenario where the OBU requests the current traffic information, the OBU can send a request to the traffic information center, so as to acquire the traffic condition information, and then the traffic information center sends the current traffic condition information to the OBU according to the request sent by the OBU.

As another preferred embodiment of the present invention, Fig. 8 is a flowchart that an OBU requests traffic condition information according to an exemplary embodiment of the present invention. As shown in Fig. 8, the flow may include the following steps S802 to S816.

At step S802, the OBU sends the request message to the traffic information center.

The OBU/the UE has been registered at the traffic information center.

The information carried in the request message includes: the traffic information identifier; moreover, the information may also include: the area of traffic information and the time window; the traffic information identifier is the required traffic information, e.g. the TMGI; the area of traffic information is the geographical location where the traffic information occurs, and can include at least one of the followings: the cell identity, the service area identity, the MBSFN area identity, the tracking area identity, and the geographical coordinates. The time window means that the traffic information acquired in the window is useful information.

The above request message can be sent through application layer signaling.

At step S804, the traffic information center returns a request response message to the OBU.

The request response message is used for indicating that the traffic information center has received the request message, and can be sent through application layer signaling.

At step S806, the traffic information center judges whether there is multicast bearer; if so, turn to S808; or else, turn to S810.

The traffic information center judges whether there is multicast bearer; if so, the traffic information can be sent through the multicast bearer; or else, unicast bearer is established to send the traffic information.

At step S808, the traffic information center sends the traffic information through the multicast bearer.

The traffic information can be sent through the followings: the MCCH notification information, the MCCH message and the MTCH data; the MCCH notification information is the expanded notification information, and may contain the traffic information indication; the MCCH message may contain the location information of the traffic information.

At step S810, traffic information center establishes the unicast bearer with the OBU.

The OBU enters an RRC connected mode, and establishes a unicast connection with the traffic information center.

At step S812, the traffic information center sends the traffic information through the unicast bearer.

At step S814, the OBU which has received the traffic information returns a confirmation message to the center.

The OBU can return the confirmation message on the unicast bearer.

At step S816, the traffic information center stops sending the traffic information.

After receiving the confirmation message returned by the OBU, the traffic information center stops sending the traffic information; in the time window, if the traffic information is updated, the traffic information center sends the updated traffic information to the OBU; if the time window expires, the traffic information center stops sending the traffic information and releases the unicast bearer to the OBU.

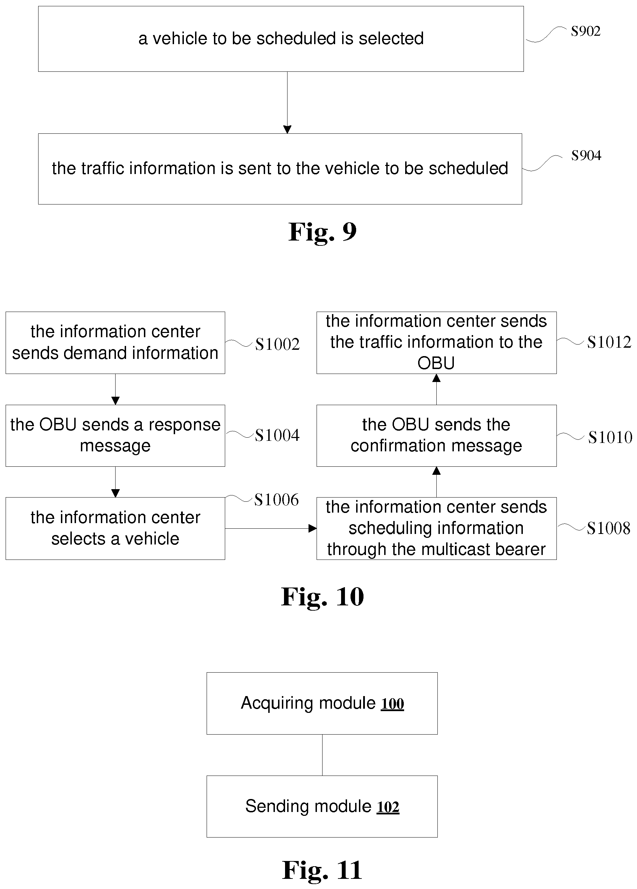

Fig. 9 is a flowchart of another method for information notification according to an embodiment of the present invention. As shown in Fig. 9, the method may include the following processing steps:
S902: a vehicle to be scheduled is selected; and
S904: the traffic information is sent to the vehicle to be schedule.

Aiming at the scenario where the traffic information center sends the vehicle scheduling information, the traffic information center can send the scheduling information to the area, then the OBU returns a response message, and traffic information center selects the vehicle meeting the condition and sends the traffic information.

In some embodiments, in S902, that the vehicle to be scheduled is selected may include the following stepsS5 to S8:
At step S5, a request message is received from the vehicle to be scheduled.

At step S6, vehicle demand information is sent through the multicast bearer according to the request message.

At step S7, a demand response message of the vehicle to be scheduled is received.

At step S8, the vehicle to be scheduled is selected according to the demand response message, information about the location where the vehicle to be scheduled is and information about traffic condition of the area where the vehicle to be scheduled is.

In some embodiments, in S904, that the traffic information is sent to the vehicle to be schedule may include the following steps S9 to S11:
At step S9, the vehicle scheduling information is sent to the vehicle to be scheduled, and the vehicle scheduling information carries the identity of the vehicle to be scheduled.
At step S10, a confirmation message is received from the vehicle to be scheduled.
At step S11, the traffic information is sent to the vehicle to be scheduled according to the confirmation message.

According to another preferred embodiment of the present invention, Fig. 10 is a flowchart that a traffic information center sends vehicle scheduling information according to preferred embodiment 4 of the present invention. As shown in Fig. 4, the flow may include the following steps S1002 to S1012:
At step S1002, the traffic information center can send the vehicle demand information through the multicast bearer.

After receiving the vehicle request message at some place, the traffic information center sends the vehicle demand information in the area of request. The vehicle demand information can be sent through the multicast bearer.

At step S1004, the OBU sends the demand response message.

The OBU which has received the vehicle demand information judges according to its own position whether to send the response message; if the vehicle is in the demand area or is going to the demand area, and the driver agrees, the OBU returns the response message to the traffic information center; or else, the OBU does not send the response message.

At step S1006, the traffic information center selects the vehicle meeting the condition.

The traffic information center can perform synthetic judgement according to the received response message, the location of the vehicle making a response and the traffic condition of the area where the vehicle making a response is to select the vehicle meeting the condition.

At step S1008, the traffic information center sends the vehicle scheduling information through the multicast bearer.

The traffic information center sends the vehicle scheduling information through the multicast bearer, and the vehicle scheduling information at least includes: a vehicle identity. The purpose of sending the scheduling information through the multicast bearer is to prevent multiple vehicles from going to the demand location.

At step S1010, the vehicle scheduled sends the confirmation message to the traffic information center.

After receiving the scheduling information, the vehicle scheduled sends the confirmation message, and the confirmation message can carry the time of reaching the demand location.

At step S1012, the traffic information center sends the traffic condition information.

The traffic information center can select a route of reaching the demand location according to the location of the vehicle scheduled, and notifies the vehicle scheduled of the traffic information about the route. The traffic information about the route can be sent through the multicast bearer or the unicast bearer.

Fig. 11 is a structure diagram of a device for information notification according to an embodiment of the present invention. As shown in Fig. 11, the device for information notification may include: an acquiring module 100, which is configured to acquire the TMGI, and the TMGI is used for indicating the traffic information service, and is allocated by the BM-SC; and a sending module 102, which is configured to send the expanded MCCH notification information according to the TMGI, and the expanded MCCH notification information is used for indicating that the MCCH message corresponding to the traffic information has been updated.

By using the device shown in Fig. 11, the problem in related technology that when the road traffic condition changes suddenly, the UE needs to monitor all the MCCH notification information, so the power consumption of the UE is increased, and the UE cannot acquire the needed traffic information timely is solved, thus reducing the power consumption for the OBU to acquire traffic and scheduling information, and facilitating the OBU to receive the required traffic information timely.

In some embodiments, that the acquiring module 100 is configured to acquire the TMGI includes one of the followings: the TMGI sent by the application server is received, and the TMGI is acquired by the application server by sending the request message to the BM-SC; and the TMGI notified by the OBU and/or the UE is received, and the TMGI is sent to the OBU and/or the UE by the application server after being acquired by the application server from the BM-SC.

In an exemplary implementation process, the expanded MCCH notification information indicates the traffic information and/or the type of traffic information by adding bits on the basis of the existing MCCH notification information.

In an exemplary implementation process, the MCCH message corresponding to traffic information may include at least one of the followings:
(1) the location information corresponding to the traffic information; and
(2) the type of traffic information.

Here, the location information includes at least one of the followings: the cell identity, the MBSFN area identity, the MBMS service identity, and the geographical coordinates.

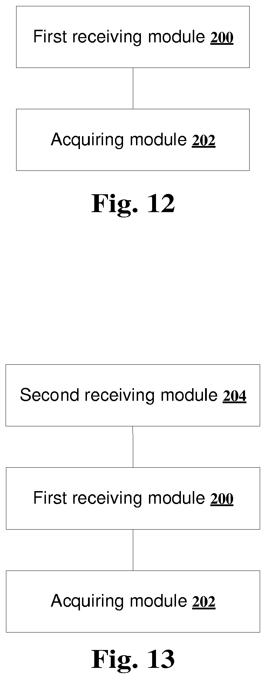

Fig. 12 is a structure diagram of another device for information notification according to an embodiment of the present invention. As shown in Fig. 12, the device for information notification may include: a first receiving module 200, which is configured to receive the expanded MCCH notification information from the base station; and an acquiring module 202, which is configured to acquire the updated MCCH message and the traffic information on the corresponding MTCH according to the expanded MCCH notification information.

In some embodiments, as shown in Fig. 13, the device may further include: a second receiving module 204, which is configured to receive the TMGI, and the TMGI is used for indicating the traffic information service, and is allocated by the BM-SC.

In some embodiments, the acquiring module 202 may include: a processing unit (not shown in the figure), which is configured to acquire the updated MCCH message according to the expanded MCCH notification information, and determine that the traffic information on the corresponding MTCH is the traffic information required according to the location information corresponding to the TMGI and the information about the location where it is; and a reading unit (not shown in the figure), which is configured to read the traffic information on the corresponding MTCH.

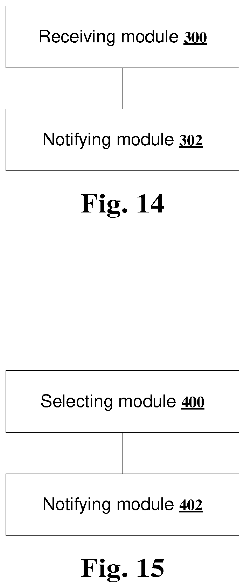

Fig. 14 is a structure diagram of another device for information notification according to an embodiment of the present invention. As shown in Fig. 14, the device for information notification may include: a receiving module 300, which is configured to receive the request message from the OBU and/or the UE; and a notifying module 302, which is configured to respond to the request message, and send the expanded MCCH notification information, and the expanded MCCH notification information is used for indicating that the MCCH message corresponding to the traffic information has been updated.

In an exemplary implementation process, the request message may carry at least one of the following information:
(1) the traffic information identifier, which is used for indicating the traffic information required by the OBU and/or the UE;
(2) the area of traffic information, which is used for indicating the geographical location where the traffic information occurs; and
(3) the time window, which is used for indicating that the traffic information acquired in the time window is useful information.

Fig. 15 is a structure diagram of another device for information notification according to an embodiment of the present invention. As shown in Fig. 15, the device for information notification may include: a selecting module 400, which is configured to select the vehicle to be scheduled; and a notifying module 402, which is configured to send the traffic information to the vehicle to be scheduled.

In some embodiments, the selecting module 400 may include: a first receiving unit (not shown in the figure), which is configured to receive the request message from the vehicle to be scheduled; a first sending unit (not shown in the figure), which is configured to send the vehicle demand information through the multicast bearer according to the request message; a second receiving unit (not shown in the figure), which is configured to receive the demand response message of the vehicle to be scheduled; and a selecting unit (not shown in the figure), which is configured to select the vehicle to be scheduled according to the demand response message, the information about the location where the vehicle to be scheduled is and the information about traffic condition of the area where the vehicle to be scheduled is.

In some embodiments, the notifying module 402 may include: a second sending unit (not shown in the figure), which is configured to send the vehicle scheduling information to the vehicle to be scheduled, and the vehicle scheduling information carries the identity of the vehicle to be scheduled; a third receiving unit (not shown in the figure), which is configured to receive the confirmation message from the vehicle to be scheduled; and a notifying unit (not shown in the figure), which is configured to send the traffic information to the vehicle to be scheduled according to the confirmation message.

It can be seen from the above description that the above embodiments achieve the following technical effects (note that, these effects can be achieved by some preferred embodiments): by adopting the technical solution provided in the embodiments of the present invention, namely reserving/allocating one or more TMGIs for indication the traffic information, the eNB sends indication information for identifying the update of the traffic information on the PDCCH of the sub-frame bearing the MCCH notification information, and the OBU which is interested in receiving the traffic information can further receive the updated MCCH message and the corresponding traffic information on the MTCH according to the indication information in the received notification information. Therefore, the power consumption for the OBU to acquire traffic and scheduling information is reduced, and the OBU receives the required traffic information timely.

Note that those skilled in the art should appreciate that the above modules and steps of the present invention can be implemented by a general-purpose computing device, and they can be centralized in a single computing device or distributed on a network composed of multiple computing devices; optionally, they can be implemented by a program code which is capable of being executed by the computing device, so that they can be stored in a storage device and executed by the computing device; and in some situations, the presented or described steps can be executed in an order different from that described here; or they are made into integrated circuit modules, respectively; or multiple modules and steps of them are made into a single integrated circuit module to realize. In this way, the present invention is not limited to any particular combination of hardware and software.

The above are exemplary embodiments of the present invention and not intended to limit the present invention. For those skilled in the art, the present invention may have various modifications and changes.

### Industrial Applicability

As mentioned above, a method and device for information notification provided in the embodiments of the present invention have the following beneficial effect: the power consumption for the OBU to acquire traffic and scheduling information can be realized, and it is realized that the OBU receives the required traffic information timely.

## Claims

1. A method for information notification, comprising:
acquiring, by a base station, a Temporary Mobile Group Identity (TMGI), wherein the TMGI indicates a traffic information service, and the TMGI is allocated by a Broadcast Multicast Service Center (BM-SC); and
sending, by the base station, expanded Multimedia Broadcast Multicast Service (MBMS) Control Channel (MCCH) notification information according to the TMGI, wherein the expanded MCCH notification information indicate that an MCCH message corresponding to traffic information has been updated.

2. The method as claimed in claim 1, wherein acquiring, by the base station, the TMGI comprises one of the followings:
receiving, by the base station, the TMGI sent by an application server, wherein the TMGI is acquired by the application server by sending a request message to the BM-SC; and
receiving, by the base station, the TMGI notified by an On Board Unit (OBU) and/or a piece of User Equipment (UE), wherein the TMGI is sent to the OBU and/or the UE by the application server after being acquired by the application server from the BM-SC.

3. The method as claimed in claim 1, wherein before sending, by the base station, the expanded MCCH notification information according to the TMGI, further comprising:
receiving, by the base station, a notification about the start of the traffic information service from the application server and/or the BM-SC.

4. The method as claimed in any one of claims 1 to 3, wherein the expanded MCCH notification information indicates the traffic information and/or the type of traffic information by adding bits on the basis of the existing MCCH notification information.

5. The method as claimed in any one of claims 1 to 3, wherein the MCCH message corresponding to traffic information comprises at least one of the followings:
location information corresponding to the traffic information; and
the type of traffic information;
wherein, the location information comprises at least one of the followings: cell identity, MBSFN area identity, MBMS service identity, and geographical coordinates.

6. A method for information notification, comprising:
receiving, by an On Board Unit (OBU) and/or a piece of User Equipment (UE), expanded Multimedia Broadcast Multicast Service (MBMS) Control Channel (MCCH) notification information from a base station; and
acquiring, by the OBU and/or the UE, an updated MCCH message and traffic information on a corresponding Multicast Traffic Channel (MTCH) according to the expanded MCCH notification information.

7. The method as claimed in claim 6, wherein before receiving, by the OBU and/or the UE, the expanded MCCH notification information from the base station, further comprising:
receiving, by the OBU and/or the UE, a Temporary Mobile Group Identity (TMGI) from an application server, wherein the TMGI indicates a traffic information service, and is allocated by a Broadcast Multicast Service Center (BM-SC) and acquired by the application server from the BM-SC.

8. The method as claimed in claim 7, wherein acquiring, by the OBU and/or the UE, the updated MCCH message and the traffic information on the corresponding MTCH according to the expanded MCCH notification information comprises:
acquiring, by the OBU and/or the UE, the updated MCCH message according to the expanded MCCH notification information, and determining that the traffic information on the corresponding MTCH is the traffic information required according to location information corresponding to the TMGI and information about the location where it is; and
reading, by the OBU and/or the UE, the traffic information on the corresponding MTCH.

9. A method for information notification, comprising:
receiving, by an application server, a request message from an On Board Unit (OBU) and/or a piece of User Equipment (UE); and
responding to, by the application server, the request message, and sending expanded Multimedia Broadcast Multicast Service (MBMS) Control Channel (MCCH) notification information to the OBU and/or the UE through a base station eNB, wherein the expanded MCCH notification information indicate that an MCCH message corresponding to traffic information has been updated.

10. The method as claimed in claim 9, wherein the request message carries at least one of the followings:
a traffic information identifier, which indicates the traffic information required by the OBU and/or the UE;
an area of traffic information, which indicates a geographical location where the traffic information occurs; and
a time window, which indicates that the traffic information acquired in the time window is useful information.

11. A method for information notification, comprising:
selecting a vehicle to be scheduled; and
sending traffic information to the vehicle to be scheduled.

12. The method as claimed in claim 11, wherein selecting the vehicle to be scheduled comprises:
receiving a request message from the vehicle to be scheduled;
sending vehicle demand information through a multicast bearer according to the request message;
receiving a demand response message of the vehicle to be scheduled; and
selecting the vehicle to be scheduled according to the demand response message, information about the location where the vehicle to be scheduled is and information about traffic condition of the area where the vehicle to be scheduled is.

13. The method as claimed in claim 11, wherein sending the traffic information to the vehicle to be scheduled comprises:
sending vehicle scheduling information to the vehicle to be scheduled, wherein the vehicle scheduling information carries the identity of the vehicle to be scheduled;
receiving a confirmation message from the vehicle to be scheduled; and
sending the traffic information to the vehicle to be scheduled according to the confirmation message.

14. A device for information notification, comprising:
an acquiring module, which is configured to acquire a Temporary Mobile Group Identity (TMGI), wherein the TMGI indicates a traffic information service, and is allocated by a Broadcast Multicast Service Center (BM-SC); and
a sending module, which is configured to send expanded Multimedia Broadcast Multicast Service (MBMS) Control Channel (MCCH) notification information according to the TMGI, wherein the expanded MCCH notification information indicate that an MCCH message corresponding to traffic information has been updated.

15. The device as claimed in claim 14, wherein that the acquiring module is configured to acquire the TMGI comprises one of the followings:
receiving the TMGI sent by an application server, wherein the TMGI is acquired by the application server by sending a request message to the BM-SC; and
receiving the TMGI notified by an On Board Unit (OBU) and/or a piece of User Equipment (UE), wherein the TMGI is sent to the OBU and/or the UE by the application server after being acquired by the application server from the BM-SC.

16. The device as claimed in claim 14 or 15, wherein the expanded MCCH notification information indicates the traffic information and/or the type of traffic information by adding bits on the basis of the existing MCCH notification information.

17. The device as claimed in claim 14 or 15, wherein the MCCH message corresponding to traffic information comprises at least one of the followings:
location information corresponding to the traffic information; and
the type of traffic information;
wherein, the location information comprises at least one of the followings: cell identity, MBSFN area identity, MBMS service identity, and geographical coordinates.

18. A device for information notification, comprising:
a first receiving module, which is configured to receive expanded Multimedia Broadcast Multicast Service (MBMS) Control Channel (MCCH) notification information from a base station; and
an acquiring module, which is configured to acquire an updated MCCH message and traffic information on a corresponding Multicast Traffic Channel (MTCH) according to the expanded MCCH notification information.

19. The device as claimed in claim 18, further comprising:
a second receiving module, which is configured to receive a Temporary Mobile Group Identity (TMGI), wherein the TMGI indicates a traffic information service, and is allocated by a Broadcast Multicast Service Center (BM-SC).

20. The device as claimed in claim 19, wherein the acquiring module comprises:
a processing unit, which is configured to acquire the updated MCCH message according to the expanded MCCH notification information, and determine that the traffic information on the corresponding MTCH is the traffic information required according to location information corresponding to the TMGI and information about the location where it is; and
a reading unit, which is configured to read the traffic information on the corresponding MTCH.

21. A device for information notification, comprising:
a receiving module, which is configured to receive a request message from an On Board Unit (OBU) and/or a piece of User Equipment (UE); and
a notifying module, which is configured to respond to the request message, and send expanded Multimedia Broadcast Multicast Service (MBMS) Control Channel (MCCH) notification information, wherein the expanded MCCH notification information indicate that an MCCH message corresponding to traffic information has been updated.

22. The device as claimed in claim 21, wherein the request message carries at least one of the followings:
a traffic information identifier, which indicates the traffic information required by the OBU and/or the UE;
an area of traffic information, which indicates a geographical location where the traffic information occurs; and
a time window, which indicates that the traffic information acquired in the time window is useful information.

23. A device for information notification, comprising:
a selecting module, which is configured to select a vehicle to be scheduled; and
a notifying module, which is configured to send traffic information to the vehicle to be scheduled.

24. The device as claimed in claim 23, wherein the selecting module comprises:
a first receiving unit, which is configured to receive a request message from the vehicle to be scheduled;
a first sending unit, which is configured to send vehicle demand information through a multicast bearer according to the request message;
a second receiving unit, which is configured to receive a demand response message of the vehicle to be scheduled; and
a selecting unit, which is configured to select the vehicle to be scheduled according to the demand response message, information about the location where the vehicle to be scheduled is and information about traffic condition of the area where the vehicle to be scheduled is.

25. The device as claimed in claim 23, wherein the notifying module comprises:
a second sending unit, which is configured to send vehicle scheduling information to the vehicle to be scheduled, wherein the vehicle scheduling information carries the identity of the vehicle to be scheduled;
a third receiving unit, which is configured to receive a confirmation message from the vehicle to be scheduled; and
a notifying unit, which is configured to send the traffic information to the vehicle to be scheduled according to the confirmation message.
